# EUROPÄISCHE PATENTSCHRIFT

(11) **EP 1 160 518 B1**
(45) Veröffentlichungstag und Bekanntmachung des Hinweises auf die Patenterteilung: **03.08.2005**
(21) Anmeldenummer: 00111595.5
(22) Anmeldetag: 31.05.2000
(51) Int. Cl.: F24F 6/04

(54) **Oberflächen-Verdunstungsbefeuchter**
Humidifier with surface evaporation
Humidificateur à évaporation sur une surface

(43) Veröffentlichungstag der Anmeldung: 05.12.2001
(73) Patentinhaber: Heinz Schilling KG, 47906 Kempen (DE)
(72) Erfinder: Schilling, Heinz, 47906 Kempen (DE); Bongartz, Werner, 47906 Kempen (DE)
(74) Vertreter: COHAUSZ DAWIDOWICZ HANNIG & PARTNER

(56) Entgegenhaltungen:
- EP-A- 0 334 017
- CH-A- 687 417
- DE-A- 1 501 278
- DE-A- 3 143 443
- GB-A- 937 830
- US-A- 2 522 600
- US-A- 2 856 166
- US-A- 4 200 599
- US-A- 4 312 819
- US-A- 4 389 352
- US-A- 4 612 778
- US-A- 4 657 709
- PATENT ABSTRACTS OF JAPAN vol. 2000, no. 02, 29. Februar 2000 (2000-02-29) -& JP 11 316035 A (KIMURA KOHKI CO LTD), 16. November 1999 (1999-11-16)

## Beschreibung

Die Erfindung betrifft einen Verdunstungsbefeuchter mit einer Verdunstungskörper-Anordnung, die in einen luftanströmseitigen Bereich und einen luftabströmseitigen Bereich unterteilt ist, sowie ein Verfahren zum Betrieb des erfindungsgemäßen Verdunstungsbefeuchters.

Verdunstungsbefeuchter sind allgemein bekannt und werden z.B. dort eingesetzt, wo bestimmte Klimabedingungen, insbesondere eine bestimmte Luftfeuchtigkeit oder auch Temperatur eingehalten werden müssen. Anwendung finden die Verdunstungsbefeuchter dementsprechend z.B. bei der Befeuchtung und Kühlung von Gebäuden, Lagerhallen, Gewächshäusern, Prozeßanlagen etc.

Ein üblicher Verdunstungsbefeuchter beruht auf der Technik, daß auf einen Verdunstungskörper mit sehr großer Oberfläche von z.B. mehreren hundert Quadratmetern bei einem Volumen von z.B. nur etwa einem Kubikmeter von oben mittels einer Wasserverteilvorrichtung Wasser aufgebracht wird, welches aufgrund der Schwerkraftwirkung den Verdunstungskörper von oben nach unten durchdringt und nach einer Durchlaufzeit vom mehreren, z.B. 20 Minuten am unteren Ende des Verdunstungskörpers austritt, wo es von dessen Abtropffläche in eine Wasserauffangvorrichtung abtropft. Von dort wird das Wasser wieder in die Wasserverteilvorrichtung gepumpt, woduch ein Wasserkreislauf ausgebildet wird.

Eine mögliche Art einer Verdunstungskörper-Konstruktion kann z.B. aus einer Vielzahl von Platten bestehen, die feine Wellen aufweisen, denen weitere gröbere Wellen überlagert sind, so daß sich sowohl eine Fein- als auch eine Grobstruktur in jeder Platte ausbildet. Nebeneinanderliegende Platten sind so angeordnet, daß die gröberen Wellen kreuzweise verlaufen und eine gleichmäßige Wasserverteilung fördern, wobei die Feinstruktur eine stabilisierende Wirkung hat.

Für die Ausbildung der Platten eines solchen Verdunstungskörpers kommen als Material z.B. imprägniertes Papier, Glasfaser, Aluminium u.a. in Betracht.

Üblicherweise senkrecht zur Durchflußrichtung des Wasser durchströmt Luft den Verdunstungskörper, wobei diese befeuchtet und gekühlt wird. Da die Befeuchtung auf dem Prinzip der Verdunstung beruht, ist die -Wasserabgabe an die Luft im wesentlichen aerosolfrei, sodaß aus dem Wasser kaum Bakterien oder sonstige Verunreinigungen an die Luft abgegeben werden. Darüberhinaus stellt sich weiterhin ein Reinigungseffekt ein, da aus der Luft wasserlösliche Schadgase sowie Staubpartikel und andere Verunreinigungen im Verdunstungskörper an das durchlaufende Wasser abgegeben werden.

Durch die Verdunstung und die Abscheidung von Verunreinigungen ergibt sich jedoch das Problem, daß sich zum einen die Kalk- und Salzkonzentrationen des umlaufenden Wasser erhöhen und zum anderen das Wasser immer mehr verschmutzt, wodurch es eindickt. Dies hat zur Folge, daß durch die Verschmutzung des Verdunstungskörpers dessen Wirkungsgrad sinkt und weiterhin auch die Wasserverteilvorrichtung, die z.B. aus Sprühdüsen ausgebildet ist, verstopft. Weiterhin kann sich durch die Verschmutzung eine Bakterienbelastung und eine mitunter starke Geruchsbelästigung ergeben, so daß ein hygienischer Betrieb nicht möglich ist.

Um diese Probleme zu verringern, wird z.B. kontinuierlich ein Teil des umlaufenden Wassers aus dem Kreislauf abgeleitet, d.h. abgeschlämmt und durch Frischwasser ersetzt. Dennoch muß ein Verdunstungskörper und eine Wasserverteilvorrichtung regelmäßig gewartet, gereinigt und/oder ersetzt werden.

Die US 4,612,778 zeigt ein konventionelles Verdunstungsbefeuchtersystem, über dem zur Steigerung der Verdunstungseffektivität ein weiteres kastenförmiges Befeuchtungssystem angeordnet ist und diese zusammengesetzte Verdunstungsbefeuchteranordnung einen luftanströmseitigen und einen luftabströmseitigen Bereich bildet, wobei das Wasser für beide Verdunstungskörperbereiche demselben Wasserkreislauf entnommen wird.

Die DE-A-1 501 278 zeigt ebenso eine Verdunstungsbefeuchteranordnung mit luftanströmseitigem und luftabströmseitigem Bereich. Auch hier wird das Wasser immer demselben Kreislauf für beide Bereiche entnommen und weist somit in beiden Bereichen immer dieselbe Qualität auf.

Aufgabe der Erfindung ist es, einen Verdunstungsbefeuchter zu schaffen, der weniger verschmutzt, einen hygienischen Betrieb ermöglicht, längere Wartungsintervalle hat und bei einer Wartung kostengünstig und schnell instandgesetzt werden kann.

Diese Aufgabe wird zum einen dadurch gelöst, daß bei dem Verdunstungsbefeuchter mit einer Unterteilung in einen luftanströmseitigen und einen luftabströmseitigen Bereich jeder Bereich separat mit Wasser beaufschlagt ist, wobei der luftabströmseitige Bereich ausschließlich mit Frischwasser und der luftanströmseitige Bereich mit Umfaufwasser beaufschlagt ist, von dem ein Teil abgeschlämmt und durch Wasser ersetzt wird, das aus dem luftabströmseitigen Bereich austritt. Die Aufgabe wird zum anderen dadurch gelöst, daß der Verdunstungsbefeuchter mit dem erfindungsgemäßen Verfahren nach Anspruch 21 betrieben wird.

Durch diese erfindungsgemäße Trennung der Verdunstungskörper-Anordnung in zwei in Luftströmungsrichtung hintereinander angeordnete Bereiche mit separater Wasserversorgung kann erreicht werden, daß die Bereiche mit unterschiedlichen Wasserqualitäten betrieben werden können, die einen Einfluß auf den Grad der Verschmutzung der Bereiche haben.

So wird der luftabströmseitige Bereich mit Frischwasser und der luftanströmseitige Bereich mit Umlaufwasser beaufschlagt. Hierdurch wird erreicht, daß der luftabströmseitige Bereich wesentlich weniger verschmutzt als der luftanströmseitige und dementsprechend weniger und/oder kostengünstiger gewartet werden kann.

Demgegenüber wird aufgrund des Luftreinigungseffektes bei dieser Konstruktion der luftanströmseitige Bereich deutlich stärker und schneller verschmutzen, so daß dieser erste Bereich häufiger ausgetauscht oder gereinigt werden muß, um einen störungsfreien Betrieb zu gewährleisten.

Um eine separate Wasserbeaufschlagung beider Bereiche zu erreichen, kann über jedem dieser Bereiche eine zugehörige Wasserverteilvorrichtung angeordnet sein.

Das durch die Verdunstungskörper-Anordnung hindurchfließende Wasser sammelt sich jeweils an einer Abtropffläche des entsprechenden Bereichs, die an dessen unterem Ende ausgebildet ist. Von dieser Fläche tropft das Wasser in Wasserauffangvorrichtungen und kann vor dort aus je nach Bedarf weitergeleitet werden.

Bevorzugt umfaßt dabei jede Wasserauffangvorrichtung eine Auffangwanne, die unterhalb der jeweiligen Abtropffläche angeordnet ist. Hierbei ist es auch möglich, daß eine bestimmte Auffangwanne, von denen innerhalb eines Verdunstungsbefeuchters mehrere vorgesehen sein können, sowohl das Wasser nur aus einem oder aber auch aus beiden Bereichen sammelt, wobei es auch möglich ist, mit einer Auffangwanne das Wasser aus einem der Bereiche vollständig und aus dem anderen Bereich, z.B. dem luftanströmseitigen nur zum Teil zu sammeln.

Neben einer Auffangwanne kann eine Wasserauffangvorrichtung auch noch ein Wassersammelbecken, eine Pumpe, Wasserstandsregler, Überlaufleitungen, Ventile, Wasserleitungen und weitere Elemente umfassen. Eine einfache Ausführung einer Wasserauffangvorrichtung kann z.B. nur eine Auffangwanne und eine Wasserleitung auffweisen, die als Abschlämmleitung dient und das abgeführte Wasser in einen Abfluß leitet.

Bei der erfindungsgemäßen Konstruktion eines Verdunstungsbefeuchters wird bevorzugt die Abtropffläche des luftabströmseitigen Bereichs vollständig über einer Auffangwanne angeordnet, die das aus diesem Bereich tropfende Wasser sammelt und direkt oder indirekt über ein zwischengeschaltetes Wasser-Sammelbecken in die Wasserverteilvorrichtung des luftanströmseitigen Bereichs leitet. Hierbei können zur Förderung des Wassers z.B. Pumpen, Leitungen und Ventile eingesetzt werden. Auffangwanne und Wassersammelbecken können auch durch ein Element verkörpert sein.

Demgegenüber ist bevorzugt die Abtropffläche des luftanströmseitigen Bereichs zu einem kleinen Teil über einer ersten Wasserauffangvorrichtung, insbesondere der Auffangwanne und zu einem anderen größeren Teil über einer zweiten Wasserauffangvorrichtung/Auffangwanne angeordnet, die insbesondere der Auffangwanne bzw. der Wasserauffangvorrichtung des luftabströmseitigen Bereiches entsprechen kann.

Mittels der oben beschriebenden Konstruktion ist das aus dem luftabströmseitigen Bereich in die Wasserauffangvorrichtung, insbesondere Auffangwanne abtropfende Wasser der Wasserverteilvorrichtung des luftanströmseitigen Bereiches zuführbar, so daß das Wasser entgegen der Luftströmungsrichtung nacheinander die einzelnen Bereiche durchfließt.

Da die Abtropffläche des luftanströmseitigen Bereiches zu einem Teil über der ersten Wasserauffangvorrichtung, insbesondere der Auffangwanne und zu einen anderen Teil über der zweiten Wasserauffangvorrichtung, insbesondere der Auffangwanne des folgenden luftabströmseitigen Bereiches angeordnet ist, wird ein Teil, insbesondere der größere Teil, des aus dem ersten Bereich austretenden Wassers in die zweite Wasserauffangvorrichtung tropfen und sodann erneut der ersten Wasserverteilvorrichtung zugeführt, wodurch sich ein Wasserkreislauf durch den luftanströmseitigen Bereich einstellt.

Der andere, insbesondere geringere Teil des Wassers, das in die erste Wasserauffangvorrichtung, insbesondere die Auffangwanne tropft, wird direkt über eine Abschlämmleitung einem Abfluß zugeführt. Hierbei werden etwa 10 bis 20 Prozent der umlaufenden Wassermenge abgeschlämmt. Bevorzugt ist dieser Anteil variabel einstellbar, was z.B. dadurch erreicht werden kann, daß eine Trennwand, die das abtropfende Wasser der einen oder der anderen Auffangwanne zuleitet, verschiebbar oder zumindest in einem oberen Bereich verkippbar ist. Hierdurch wird der Anteil der Abtropffläche, der über der einen oder der anderen Auffangwanne angeordnet ist, variiert.

Das dem durch den luftanströmseitigen Bereich ausgebildeten Wasserkreislauf entzogene Wasser wird über das dem luftabströmseitigen Bereich zugeführte Frischwasser ersetzt. Da bereits im luftanströmseitigen Bereich eine sehr hohe Befeuchtung der Luft von ca. 60-70 Prozent der Gesamtbefeuchtung erreicht wird, wird dem luftabströmseitigen Bereich durch Verdunstung nur noch sehr wenig Wasser entzogen, so daß dieser Bereich praktisch nicht verkalkt, nicht verschmutzt und mit einer sehr geringen ausschließlich aus Frischwasser bestehenden Wassermenge betrieben werden kann, was kostengünstig und umweltfreundlich ist.

Das Frischwasser gelangt nach Durchlaufen des zweiten, luftabströmseitigen Bereichs direkt in den Wasserkreislauf des luftanströmseitigen Bereichs. Lediglich der luftanströmseitige Bereich wird in einem Wasserkreislauf betrieben, aus dem nur ein Teil des Wasser abgeschlämmt wird, so daß wegen der hier auftretenden Verschmutzung des Wassers und dieses Bereiches eine häufigere Wartung nötig ist.

Um diese Wartungsmaßnahme möglichst günstig zu gestalten, ist es vorteilhaft, daß der luftanströmseitige Bereich unabhängig von dem anderen Bereich ersetzbar und/oder reinigbar ist und weiterhin vorteilhafterweise gegenüber dem luftabströmseitigen Bereich ein geringeres Volumen, insbesondere eine in Luftströmungsrichtung geringere Dicke aufweist, da nur dieser Bereich ausgewechselt zu werden braucht und hierdurch Material und somit Kosten gespart werden können. Dieser in Luftströmungsrichtung erste Bereich kann somit also als kostengünstiges Opfer- bzw. Verschleißbauteil dienen.

Der erfindungsgemäße Verdunstungsbefeuchter wird also so betrieben, daß der luftabströmseitige Bereich ausschließlich mit Frischwasser beaufschlagt wird, das aus dem luftabströmseitigen Bereich abtropfende Wasser einer Wasserverteilvorrichtung des luftanströmseitigen Bereiches zugeleitet wird, und daß ein Teil des aus dem luftanströmseitigen Bereich abtropfenden Wassers zurück in dessen Wasserverteilvorrichtung geleitet und ein anderer Teil abgeschlämmt wird.

Dieses Verfahren kann noch dadurch optimiert werden, daß der luftanströmseitige Bereich, insbesondere durch eine Förderpumpe, eine erhöhte Wasserbenetzung erhält und weiterhin bevorzugt der Frischwasserzulauf und/oder die Abschlämmenge automatisch geregelt werden, insbesondere in Abhängigkeit der Meßwerte einer Luftvolumenstrom-Differenzdruckeinheit und/oder eines Wasserstandsreglers. So kann vermieden werden, daß der luftanströmseitige Bereich selbst bei dem erwähnten hohen Befeuchtungsgrad partiell austrocknet und sich Kalkablagerungen bilden, die den Wirkungsgrad verringern.

Die Wartungsfreundlichkeit wird noch dadurch erhöht, daß Wasserverteilvorrichtung, Verdunstungskörper-Anordnung und Wasserauffangvorrichtung getrennt voneinander in einem Gehäuse des Verdunstungsbefeuchters montierbare Einheiten sind. Sollte ein Wartungsbedarf gegeben sein, so braucht in diesem Fall nur das tatsächlich betroffene Teil ausgewechselt oder repariert werden. Die Kosten einer Wartung können so deutlich reduziert werden.

Um die Auswechselung beispielsweise einer verschmutzten Verdunstungskörper-Anordnungen oder auch nur einem der Bereiche zu erleichtern, weist wenigstens eine Wasserverteilvorrichtung bevorzugt Führungselemente auf, welche eine Führungsschiene bilden, in die eine Verdunstungskörper-Anordnung eingeschoben werden kann. So kann dann beispielsweise durch die Öffnung einer Gehäusewand eine Verdunstungskörper-Anordnung z.B. ohne weiteres Werkzeug aus seiner Führungsschiene entnommen und gegen eine neue ausgetauscht werden.

Ebenso ist es so auf einfache Weise möglich, daß nur ein Bereich der Verdunstungskörper-Anordnung ersetzt oder gereinigt wird. Dies ist hier von besonderem Vorteil, da beim erfindungsgemäßen Verdunstungsbefeuchter mit einer in zwei Bereiche unterteilten Verdunstungskörper-Anordnung eine ungleichmäßige Verschmutzung der Bereiche vorliegt und nur der am stärksten verschmutzte Bereich gereinigt oder ausgetauscht zu werden braucht.

Die Konstruktion des Gehäuses eines Verdunstungsbefeuchters kann so ausgebildet sein, daß eine in eine Schiene eingeschobene Verdunstungskörper-Anordnung im Gehäuse auf einem Sockel-Element aufsteht. Unterhalb des Sockel-Elementes können dann z.B. Wasserauffangvorrichtungen angeordnet sein, in denen das unten aus der Verdunstungskörper-Anordnung tropfende Wasser gesammelt wird.

Die getrennte Reinigung bzw. der Austausch nur eines Bereiches der Verdunstungskörper-Anordnung kann besonders einfach dadurch realisiert werden, daß die Verdunstungskörper-Anordnung zwei getrennte Verdunstungskörper umfaßt, die insbesondere miteinander verbindbar sind. Diese Verdunstungskörper können den bekannten Verdunstungskörpern entsprechen.

Ebenso kann in einer anderen denkbaren Alternative die Verdunstungskörper-Anordnung aus einem in zwei Bereiche unterteilten Korb bestehen, wobei jeder Korbbereich mit einem Schüttgut gefüllt werden kann. Bei diesem Schüttgut kann es sich bevorzugt um Kugel handeln, die pro Volumen die größte Oberfläche zur Verdunstung bieten.

Sollte der luftanströmseitige Korbbereich einmal verschmutzt sein, so braucht nur der Korb aus dem Gehäuse des Verdunstungsbefeuchters herausgenommen und die Kugel ausgeschüttet und gereinigt bzw. ersetzt werden. Die Kugeln des luftabströmseitigen Bereiches können im Korb verbleiben.

Das Wartungsbedürfnis des erfindungsgemäßen Verdunstungsbefeuchters kann noch dadurch verringert werden, daß die oberhalb eines Befeuchterelements angeordnete Wasserverteilvorrichtung eine über einen Zulauf mit Wasser füllbare Wanne umfaßt, die Ablauföffnungen aufweist.

Gegenüber herkömmlichen Sprühdüsen, die einen sehr kleinen Querschnitt zum Versprühen von unter Druck stehendem Wasser aufweisen, fließt bei der erfindungsgemäßen Wasserverteilvorrichtung das Wasser drucklos in die Wanne ein, tritt über die Ablauföffnungen aus der Wanne aus und fällt tropfenweise auf die Oberseite eines Bereichs der Verdunstungskörper-Anordnung, über dem die Wasserverteilvorrichtung angeordnet ist.

Die gewünschte Wassermenge kann aufgrund der reinen Schwerkraftwirkung ohne Druckbeaufschlagung des Wasser mit gegenüber Sprühdüsen deutlich vergrößerten Querschnitten der Ablauföffnungen erreicht werden, so daß diese Öffnungen nicht so leicht verstopfen und daher einen längeren wartungsfreien oder wartungsarmen Betrieb des Verdunstungsbefeuchters gewährleisten.

Die Konstruktion ist derart, daß über jedem Bereich eine Wasserverteilvorrichtung angeordnet ist. Hierbei können die Ablauföffnungen in wenigstens einer Seitenwand der Wanne und innerhalb der Seitenwand auf wenigstens einer horizontalen Linie angeordnet sein.

Die Durchflußmenge an Wasser kann somit auf leichte Art dadurch vergrößert werden, daß Ablauföffnungen auf mehreren Seitenwänden und/oder auch mehr Ablauföffnungen in einer Seitenwand vorgesehen werden. Alternativ kann auch der Querschnitt der Öffnungen geändert werden.

Durch die Ausbildung der Ablauföffnungen auf einer horizontalen Linie kann erreicht werden, daß der Wasserspiegel innerhalb der Wanne bis zu einer gewünschten Höhe ansteigt und das Wasser dann durch die Ablauföffnungen austritt. Um ein gleichmäßiges Austreten des Wassers aus jeder Ablauföffnung zu gewährleisten ist es wichtig, die Ablauföffnungen exakt horizontal innerhalb des Verdunstungsbefeuchters auszurichten.

Hierzu ist es vorteilhaft, wenn die Wasserverteilvorrichtung im Verdunstungsbefeuchter ausrichtbar ist. Beispielsweise kann sie an der oberen Gehäusewand des Verdunstungsbefeuchters oder an dessen Gehäusedeckel ausrichtbar befestigt sein.

Dies ist auf einfache und günstige Art z.B. dadurch zu erreichen, daß die Wasserverteilvorrichtung mittels in Federn geführten Schrauben befestigt wird. So kann der Abstand der Wanne z.B. zur oberen Gehäusewand an jedem Befestigungspunkt separat und individuell eingestellt werden, wodurch eine waagerechte Ausrichtung der Ablauföffnungen erreicht werden kann.

Dies ist dann von Vorteil, wenn der Verdunstungsbefeuchter mit seinem Gehäuse z.B. selbst nicht exakt waagerecht eingebaut werden kann. Die Abweichungen aus der Waagerechten/Horizontalen können so einfach und problemlos in der Befestigung der Wanne ausgeglichen werden.

Um weiterhin einen gleichmäßigen Wasseraustritt sicherzustellen sollten die Ablauföffnungen, die auf einer gemeinsamen horizontalen Linie liegen, alle den gleichen Querschnitt haben.

In einer weiteren Ausgestaltung der erfindungsgemäßen Wanne der Wasserverteilvorrichtung können die Ablauföffnungen auch auf zwei oder mehreren horizontalen Linien angeordnet sein, wobei die Ablauföffnungen auf unterschiedlichen Linien gleiche oder verschiedene Durchmesser haben können.

Bevorzugt weisen die Ablauföffnungen, die auf einer höheren horizontalen Linie liegen einen größeren Querschnitt auf, als die Ablauföffnungen, die auf einer tieferen horizontalen Linie liegen. Mit dieser Konstruktion wird erreicht, daß selbst bei einer vollständigen Verstopfung der Ablauföffnungen auf der tieferen Linie durch den dann steigenden Wasserspiegel in der Wanne das Wasser aus den darüberliegenden Ablauföffnungen austritt, wobei diese Ablauföffnungen noch weniger verschmutzen oder verstopfen. Das Wartungsintervall kann also deutlich verlängert werden.

Bei der Konstruktion der Wanne können die Ablauföffnungen sowohl als Bohrungen, als auch z.B. als Schlitze oder auch in einer anderen Form ausgebildet sein.

Bei Angaben innerhalb dieser Beschreibung hinsichtlich der Anordnung von Elementen oder Vorrichtungen im Verdunstungsbefeuchter, wie z.B. der Bereiche der Verdunstungskörper-Anordnung, Wasserverteilvorrichtungen oder Wasserauffangvorrichtungen, ist immer die Anordnung in Bezug auf die Luftströmungsrichtung gemeint.

Ein Ausführungsbeispiel eines bevorzugten erfindungsgemäßen Verdunstungsbefeuchters mit einer in zwei Bereiche unterteilten Verdunstungskörper-Anordnung ist in den Figuren dargestellt und wird nachfolgend beschrieben.

Es zeigen:
- Figur 1:: Den oberen Bereich eines Verdunstungsbefeuchters mit zwei Wasserverteilvorrichtungen und zwei Bereichen der Verdunstungskörper-Anordnung in zwei verschiedenen Schnittansichten;
- Figur 2:: Eine schematische Gesamtansicht eines Verdunstungsbefeuchters mit zwei Bereichen

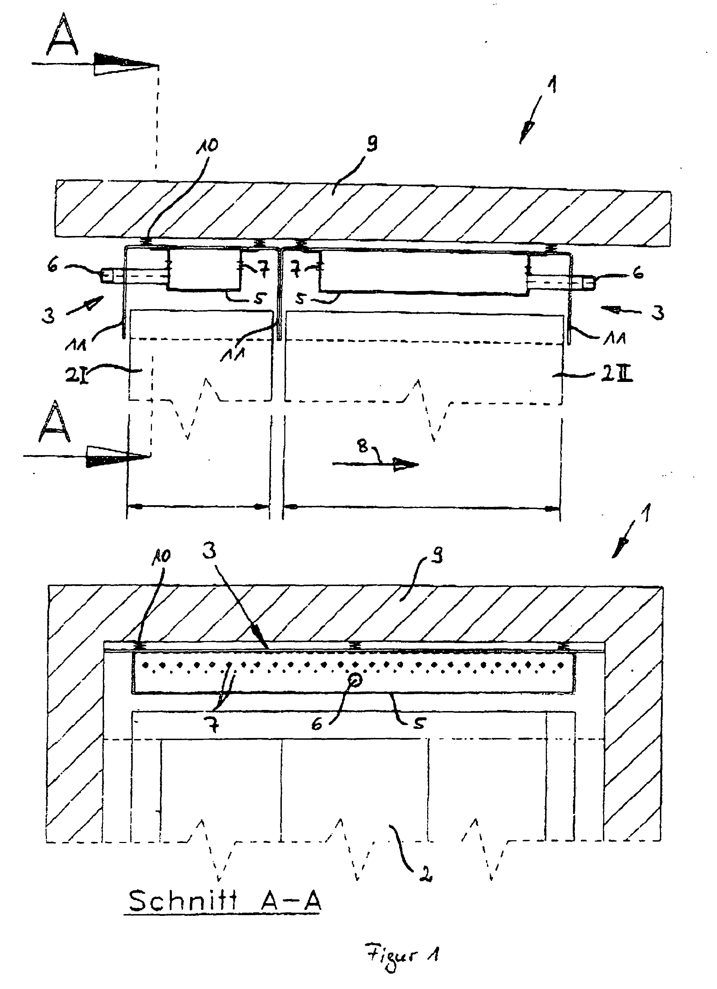

In der Figur 1 ist der obere Teil eines Verdunstungsbefeuchters 1 mit zwei erfindungsgemäßen Wasserverteilvorrichtungen 3 dargestellt, die unterhalb der Gehäusewand 9 des Verdunstungsbefeuchters befestigt sind.

Jede der Wasserverteilvorrichtungen 3 umfaßt ein U-förmig gebogenes, nach unten offenes Führungselement 11, welches mittels der beiden Seitenschenkel für eine Verdunstungskörper-Anordnung 2 zwei nebeneinanderliegende Führungsschienen bildet. Der luftanströmseitige Bereich 2 I und der luftabströmseitige Bereich 2 II der Verdunstungskörper-Anordnung 2 kann hier jeweils einem bekannten Verdunstungskörper entsprechen, wobei hier die beiden Bereiche 2 I und 2 II unterschiedliche Dicken haben.

Die beiden aneinanderstoßenden Seitenschenkel der Führungselemente 11 könnten in einer anderen Ausführungsform auch fehlen, so daß die Verdunstungskörper 2 und 2 II direkt miteinander verbunden werden können und in der Gesamtheit in die durch die äußersten Seitenschenkel der Führungselemente 11 gebildete Schiene eingeschoben werden können.

Innerhalb jedes U-förmigen Führungselementes 11 ist an dessen Oberseite eine Wanne 5 angeordnet. Die Wanne 5 kann z.B. durch Verschweißung, Verklebung, Verschraubung oder jede andere Maßnahme im Führungselement 11 befestigt sein.

Jede der beiden dargestellten Wannen 5 weist einen leitungsförmigen Zulauf 6 auf, der sich durch einen der Seitenschenkel des Führungselementes 11 bis in die Wanne 5 erstreckt. Über diesen Zulauf 6 kann Wasser in die Wanne 5 eingeleitet werden.

In jeweils zwei gegenüberliegenden Seitenwänden, hier die langen Wände der Wannen 5, sind in zwei verschiedenen Höhen jeweils auf einer etwa horizontalen Linie bohrungsförmige Ablauföffnungen 7 angeordnet. Die Ablauföffnungen 7 mit dem geringeren Bohrungsdurchmesser sind dabei auf der unteren Linie angeordnet.

Wird nun Wasser über den Zulauf 6 in die Wanne 5 eingeleitet, so füllt sich diese, bis der Wasserspiegel die unteren Ablauföffnungen 7 erreicht und durch diese tropfenweise aus der jeweiligen Wanne 5 austritt.

Um einen gleichmäßigen Wasseraustritt aus den Ablauföffnungen 7 zu gewährleisten ist es notwendig, die auf einer Linie befindlichen Ablauföffnungen 7 möglichst genau waagerecht auszurichten. Um eine solche Ausrichtung der Wasserverteilvorrichtung 3 zu ermöglichen, ist das Führungselement 11 mittels Schrauben befestigt, die im vorliegenden Ausführungsbeispiel in Druckfedern 10 geführt sind.

Hierdurch kann der Abstand zwischen Gehäusewand 9 und dem Führungselement 11 der Wasserverteilvorrichtung 3 bei jedem Befestigungspunkt individuell eingestellt werden, um so die Ablauföffnungen waagerecht auszurichten.

Das aus den unteren Ablauföffnungen 7 gleichmäßig austretende Wasser tropft sodann auf die Oberfläche des entsprechenden Bereichs 2 I oder 2 II der unter den Wannen 5 in die Führungselemente 11 eingeschobenen Verdunstungskörper-Anordnung 2 und durchläuft diese aufgrund der Schwerkraftwirkung, wobei die durch die Verdunstungskörper-Anordnung 2 in Luftströmungsrichtung 8 strömende Luft befeuchtet und gekühlt wird.

Das untere Ende jedes Bereiches 2 I bzw. 2 II bildet eine Abtropffläche 13, an der sich das durchlaufende Wasser sammelt und von dort in eine Wasserauffangvorrichtung 4 tropft. Das gesammelte Wasser wird sodann je nach Betriebsart des Verdunstungsbefeuchters 1 weitergeleitet, in einen Wasserkreislauf zurückgeführt oder zum Teil abgeschlämmt, d.h. einem Abfluß 22 zugeführt.

In dem Ausführungsbeispiel nach Figur 1 ist erkennbar, daß der luftanströmseitige Bereich 2 I deutlich dünner ausgeführt ist, als der Bereich 2 II. Der Bereich 2 I ist hier nur etwas halb so dick wie der Bereich 2 II.

Die Anordnung ist deshalb so gewählt, da der in Luftströmungsrichtung 8 zuerst angeordnete Bereich 2 I, insbesondere auch deswegen, weil er sich in einem Wasserkreislauf befindet, deutlich stärker und schneller verschmutzt, als der in Luftströmungsrichtung 8 angeordnete zweite Bereich 2 II.

Insofern braucht bei einer Verschmutzung lediglich der dünnere und daher deutlich günstigere Bereich 2 I der Verdunstungskörper-Anordnung 2 ausgetauscht werden. Dieser Bereich 2 I dient als kostengünstiges Verschleißbauteil.

Wegen der auftretenden Verschmutzung und Verdunstung des Wassers kann es vorkommen, daß die in den Wannen 5 angeordneten Ablauföffnungen 7 im Laufe der Zeit verstopfen. Dies ist bei der erfindungsgemäßen Wasserverteilvorrichtung jedoch nicht weiter problematisch, da selbst im Extremfall, wenn alle auf der unteren Linie angeordneten Ablauföffnungen verstopft sein sollten, weiterhin ein Betrieb des Verdunstungsbefeuchters 1 bis zur nächsten Wartung möglich ist.

Dies resultiert daher, daß in diesem Fall der Wasserspiegel in der betreffenden Wanne 5 ansteigt, bis er die auf der höheren Linie angeordneten Ablauföffnungen 7 erreicht und durch diese dann das Wasser aus der Wanne 5 austritt. Da diese Öffnungen, insbesondere die Bohrungen einen größeren Querschnitt haben, ist eine weitere schnelle Verstopfung unwahrscheinlich, so daß der Verdunstungsbefeuchter 1 bis zur nächsten Wartung betriebsbereit bleibt.

Es wird weiterhin durch die größeren Querschnitte der oberen Ablauföffnungen 7 gewährleistet, daß bei einer Verstopfung der unteren Ablauföffnungen 7 das Wasser weiterhin an einer definierten vorgegebenen Stelle aus der Wanne 5 austritt und immer auf die Oberfläche der Verdunstungskörper-Anordnung 2 und nicht unkontrolliert in den Verdunstungsbefeuchter 1 tropft, so daß es mit dieser Anordnung selbst bei einer Verstopfung der unteren Ablauföffnungen 7 nicht zu einem Wasseraustritt aus der Gesamtanordnung kommt.

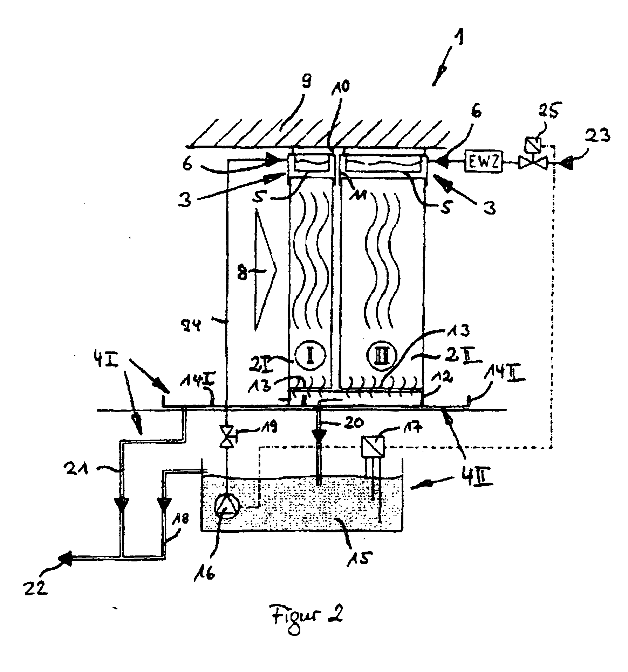

In der Figur 2 ist schematisch die Gesamtanordnung eines Verdunstungsbefeuchters 1 mit einer zweigeteilten Verdunstungskörper-Anordnung 2 dargestellt. Mittels dieser Anordnung kann das erfindungsgemäße Verfahren zum Betrieb eines Verdunstungsbefeuchters angewendet werden.

Hier sind zwei unterschiedlich dicke Bereiche 2 I und 2 II zu erkennen, die jeweils in einem der Führungselemente 11 einer zugehörigen Wasserverteilvorrichtung 3 einliegen. Hierbei steht die gesamte Verdunstungskörper-Anordnung 2 auf einem Sockel-Element 12 auf. Beide Bereiche 2 I und 2 II werden nacheinander von Luft in der Luftströmungsrichtung 8 durchströmt, so daß die Luft mittels des erfindungsgemäßen Verfahrens gekühlt, gereinigt und befeuchtet werden kann, wobei nur der erste Bereich einer signifikanten Verschmutzung unterliegt.

Bei dem erfindungsgemäßen Verfahren wird über die Frischwasserzufuhr 23 Frischwasser in die Wasserverteilvorrichtung 3 des in Luftströmungsrichtung 8 zweiten Bereiches 2 II eingeleitet. Insbesondere gelangt das Wasser bei der hier dargestellten Wasserverteilvorrichtung 3 durch den Zulauf 6 in die Wanne 5 und von dort durch die Ablauföffnungen 7 auf die Oberfläche des Bereiches 2 II. Das Frischwasser durchläuft diesen Bereich 2 II aufgrund der Schwerkraftwirkung bis es die untere Abtropffläche 13 des Bereiches 2 II erreicht und von dort in die Wasserauffangvorrichtung 4 II abtropft.

Diese Wasserauffangvorrichtung 4 II ist gebildet durch eine Auffangwanne 14 II, die derart unter der Abtropffläche 13 des Befeuchterelementes 2 II angeordnet ist, daß sämtliches von der Abtropffläche 13 des Bereiches 2 II abtropfende Wasser in dieser Auffangwanne 14 II aufgefangen wird.

Dieses Wasser fließt sodann durch eine Leitung 20 in ein zur Wasserauffangvorrichtung 4 II gehörendes Wassersammelbecken 15 und wird von dort über eine Pumpe 16 durch ein Ventil 19 und eine weitere Leitung 24 dem Zulauf 6 der Wasserverteilvorrichtung 3 zugeführt, die sich über dem in Luftströmungsrichtung 8 ersten Bereich 2 I der Verdunstungskörper-Anordnung 2 befindet.

Bei der Wasserverteilvorrichtung, wie sie hier vorliegt, gelangt das Wasser durch den Zulauf 6 in die entsprechende Wanne 5 der ersten Wasserverteilvorrichtung 3 und tropft aus deren Ablauföffnungen 7 auf die Oberfläche des ersten Bereiches 2 I.

Nach Durchdringen dieses Bereiches 2 I tropft das Wasser von der Abtropffläche 13 des ersten Bereiches 2 I ab. Hierbei gelangt der größte Teil des abtropfenden Wassers in die Auffangwanne 14 II, über der der größte Teil der Abtropffläche 13 des ersten Bereiches 2 I angeordnet ist und wird, wie oben beschrieben, wieder der ersten Wasserverteilvorrichtung 3 zugeführt. Es ergibt sich somit ein Wasserkreislauf.

Die Abtropffläche 13 des ersten Bereiches 2 I ist jedoch zu einem kleinen Teil auch über einer ersten Auffangwanne 14 I angeordnet, die zu einer anderen ersten Wasserauffangvorrichtung 4 I gehört. Somit tropft ein geringer Teil des aus dem ersten Bereich 2 I abgegebenen Wassers in diese Auffangwanne 14 I und gelangt über eine Abschlämmleitung 21 in einen Abfluß 22.

Dadurch wird erreicht, daß ein Teil des im Wasserkreislauf durch den ersten Bereich 2 I befindlichen und im Laufe der Zeit verschmutzenden Wassers aus diesem Kreislauf entfernt wird. Der abgeschlämmte Wasseranteil wird dabei zur Aufrechterhaltung der Gesamtwassermenge durch einen Frischwasseranteil ersetzt, der, wie oben beschrieben, dem Wasserkreislauf über den zweiten Bereich 2 II zugeführt wird.

Der in Luftströmungsrichtung 8 angeordnete zweite Bereich 2 II wird dementsprechend ausschließlich mit einer kleinen Frischwassermenge betrieben.

Da der zweite Bereich 2 II neben dem sauberen Frischwasser auch nur von vorgereinigter Luft aus dem ersten Bereich 2 I durchströmt wird, ist die Verschmutzung des zweiten Bereiches 2 II sehr gering.

Lediglich der erste Bereich 2 I kommt mit der ungereinigten dreckigen Luft in Berührung und befindet sich in einem Wasserkreislauf, so daß dieser Bereich 2 I schneller verschmutzt, wegen seiner erfindungsgemäß geringen Dicke jedoch schnell und kostengünstig ersetzt werden kann.

Die Menge des nachzufüllenden Frischwasseranteils ist gleich dem Wasseranteil, der durch die Abschlämmung verloren geht und kann mittels einer Steuerung entweder langsam kontinuierlich oder intermittierend nachgefüllt werden.

Dies erfolgt erfindungsgemäß dadurch, daß der Wasserstand in dem Wassersammelbecken 15 mittels eines Wasserstandsreglers 15 ermittelt wird. Unterschreitet der Wasserstand in dem Sammelbecken aufgrund der kontinuierlichen Abschlämmung ein gewisses Mindestmaß, kann z.B. über den Wasserstandsregler 17 ein motorisches Regelventil 25 oder elektromagnetisches Zuflußventil 25 angesteuert werden, sodaß Frischwasser aus der Frischwasserzufuhr 23 in die Wanne 5 der Wasserverteilvorrichtung 3 des zweiten Bereiches 2 II gelangt und nach Durchlaufen des zweiten Bereiches 2 II den Wasserkreislauf des ersten Bereiches 2 I auffüllt.

Sollte die zugeführte Wassermenge zu groß sein, so ist durch eine Überlaufleitung 18 sichergestellt, daß die Übermenge an Wasser kontrolliert aus dem Wassersammelbecken 15 in den Abfluß 22 geleitet wird.

Das erfindungsgemäße Verfahren zum Betrieb eines Verdunstungsbefeuchters 1 mit einer in zwei Bereiche 2 I und 2 II unterteilten Verdunstungskörper-Anordnung 2 gestattet es weiterhin durch Regelung der Pumpe 16 die pro Zeiteinheit umlaufende Wassermenge im Wasserkreislauf durch den ersten Bereich 2 I zu erhöhen oder in einer gewünschten Weise zu regeln.

Durch das erfindungsgemäße Verfahren zum Betrieb eines Verdunstungsbefeuchters mit den beiden Bereichen 2 I und 2 II ist sichergestellt, daß nur der erste dünne Bereich 2 I einer signifikanten Verschmutzung unterliegt und im Wartungsfall kostengünstig ausgetauscht werden kann.

Das Verfahren kann nicht nur mit der erfindungsgemäßen Wasserverteilvorrichtung und bekannten Verdunstungskörpern, sondern allgemein mit jeder Wasserverteilvorrichtung und jeder denkbaren Verdunstungskörper-Anordnung angewendet werden.

## Patentansprüche

1. Verdunstungsbefeuchter mit einer Verdunstungskörper-Anordnung, die in einen luftanströmseitigen Bereich (2 I) und einen luftabströmseitigen Bereich (2 II) unterteilt ist, **dadurch gekennzeichnet, daß** jeder Bereich separat mit Wasser beaufschlagt ist, wobei der luftabströmseitige Bereich (2 II) ausschließlich mit Frischwasser und der luftanströmseitige Bereich (2 I) mit Umlaufwasser beaufschlagt ist, von dem ein Teil abgeschlämmt und durch Wasser ersetzt wird, das aus dem luftabströmseitigen Bereich (2 II) austritt.

2. Verdunstungsbefeuchter nach einem der vorherigen Ansprüche, **dadurch gekennzeichnet, daß** über jedem Bereich (2 I, 2 II) eine Wasserverteilvorrichtung (3) angeordnet ist, aus der der jeweilige Bereich (2 I, 2 II) mit Wasser beaufschlagt wird.

3. Verdunstungsbefeuchter nach einem der vorherigen Ansprüche, **dadurch gekennzeichnet, daß** unter dem luftabströmseitigen Bereich (2 II) eine Wasserauffangvorrichtung (4 II) angeordnet ist, aus der das aufgefangene Wasser in die Wasserverteilvorrichtung (3) des luftanströmseitigen Bereiches (2 I) geleitet wird.

4. Verdunstungsbefeuchter nach einem der vorherigen Ansprüche, **dadurch gekennzeichnet, daß** der luftanströmseitige Bereich (2 I) eine untere Abtropffläche (13) aufweist, die zu einem kleinen Teil über einer ersten Wasserauffangvorrichtung (4 I) und zu einem größeren Teil über einer zweiten Wasserauffangvorrichtung (4 II) angeordnet ist.

5. Verdunstungsbefeuchter nach einem der vorherigen Ansprüche, **dadurch gekennzeichnet, daß** das Wasser aus der ersten Wasserauffangvorrichtung (4 I) abgeschlämmt und aus der zweiten Wasserauffangvorrichtung (4 II) in die Wasserverteilvorrichtung (3) des luftanströmseitigen Bereiches (2 I) zurückgeleitet wird.

6. Verdunstungsbefeuchter nach einem der vorherigen Ansprüche, **dadurch gekennzeichnet, daß** der Anteil der aus der ersten Wasserauffangvorrichtung (41) abgeschlämmten Wassermenge variabel einstellbar ist.

7. Verdunstungsbefeuchter nach Anspruch 6, **dadurch gekennzeichnet, daß** der Anteil einer Abtropffläche, der über einer ersten oder einer zweiten Auffangwanne angeordnet ist, variabel ist.

8. Verdunstungsbefeuchter nach Anspruch 7, **dadurch gekennzeichnet, daß** eine Trennwand, die das abtropfende Wasser der einen oder der anderen Auffangwanne zuleitet, verschiebbar oder in einem oberen Bereich verkippbar ist.

9. Verdunstungsbefeuchter nach einem der vorherigen Ansprüche, **dadurch gekennzeichnet, daß** der luftanströmseitige Bereich (2 I) ein geringeres Volumen, insbesondere eine in Luftströmungsrichtung (8) geringere Dicke aufweist als der luftabströmseitige Bereich (2 II).

10. Verdunstungsbefeuchter nach einem der vorherigen Ansprüche, **dadurch gekennzeichnet, daß** Wasserverteilvorrichtung (3), Verdunstungskörper-Anordnung (2) und Wasserauffangvorrichtung (4 I, 4 II) getrennt voneinander in einem Gehäuse (9) des Verdunstungsbefeuchters (1) montierbare Einheiten sind.

11. Verdunstungsbefeuchter nach einem der vorherigen Ansprüche, **dadurch gekennzeichnet, daß** die beiden Bereiche (2 I, 2 II) der Verdunstungskörper-Anordnung (2) unabhängig voneinander ersetzbar und/oder reinigbar sind.

12. Verdunstungsbefeuchter nach einem der vorherigen Ansprüche, **dadurch gekennzeichnet, daß** eine Wasserverteilvorrichtung (3) Führungselemente (11) aufweist, welche eine Führungsschiene für eine darin einschiebbare Verdunstungskörper-Anordnung (2) bilden.

13. Verdunstungsbefeuchter nach einem der vorherigen Ansprüche, **dadurch gekennzeichnet, daß** eine in eine Schiene eingeschobene Verdunstungskörper-Anordnung (2) im Gehäuse (9) auf einem Sockel-Element (12) aufsteht.

14. Verdunstungsbefeuchter nach einem der vorherigen Ansprüche, **dadurch gekennzeichnet, daß** die Verdunstungskörper-Anordnung (2) zwei getrennte Verdunstungskörper (2 I, 2 II) umfaßt, die insbesondere miteinander verbindbar sind.

15. Verdunstungsbefeuchter nach einem der vorherigen Ansprüche, **dadurch gekennzeichnet, daß** die Verdunstungskörper-Anordnung (2) aus einem in zwei Bereiche unterteilten Korb besteht, wobei jeder Korbbereich mit einem Schüttgut, insbesondere Kugeln füllbar ist.

16. Verdunstungsbefeuchter nach einem der vorherigen Ansprüche, **dadurch gekennzeichnet, daß** die oberhalb der Verdunstungskörper-Anordnung (2) angeordnete Wasserverteilvorrichtung (3) eine über einen Zulauf (6) mit Wasser füllbare Wanne (5) umfaßt, die Ablauföffnungen (7) aufweist.

17. Verdunstungsbefeuchter nach einem der vorherigen Ansprüche, **dadurch gekennzeichnet, daß** die Ablauföffnungen (7) in wenigstens einer Seitenwand der Wanne (5) angeordnet sind.

18. Verdunstungsbefeuchter nach einem der vorherigen Ansprüche, **dadurch gekennzeichnet, daß** die Ablauföffnungen (7) auf wenigstens einer horizontalen Linie angeordnet sind.

19. Verdunstungsbefeuchter nach einem der vorherigen Ansprüche, **dadurch gekennzeichnet, daß** die Wasserverteilvorrichtung (3) im Verdunstungsbefeuchter (1) ausrichtbar, insbesondere an der oberen Gehäusewand (9) oder dem Gehäusedeckel, befestigbar ist.

20. Verdunstungsbefeuchter nach einem der vorherigen Ansprüche, **dadurch gekennzeichnet, daß** die Wasserverteilvorrichtung (3) mittels in Federn (10) geführten Schrauben befestigbar und ausrichtbar ist.

21. Verdunstungsbefeuchter nach einem der vorherigen Ansprüche, **dadurch gekennzeichnet, daß** die Ablauföffnungen (7), die auf einer gemeinsamen horizontalen Linie liegen, alle den gleichen Durchmesser haben.

22. Verdunstungsbefeuchter nach einem der vorherigen Ansprüche, **dadurch gekennzeichnet, daß** die Ablauföffnungen (7), die auf einer höheren horizontalen Linie liegen einen größeren Durchmesser aufweisen, als die Ablauföffnungen (7), die auf einer tieferen horizontalen Linie liegen.

23. Verfahren zum Betrieb eines Verdunstungsbefeuchters nach einem der vorherigen Ansprüche, **dadurch gekennzeichnet, daß**
- der luftabströmseitige Bereich (2 II) ausschließlich mit Frischwasser beaufschlagt wird,
- das aus dem luftabströmseitigen Bereich (2 II) abtropfende Wasser einer Wasserverteilvorrichtung (3) des luftanströmseitigen Bereiches (2 I) zugeleitet wird,
- ein Teil des aus dem luftanströmseitigen Bereich (2 I) abtropfenden Wassers zurück in dessen Wasserverteilvorrichtung (3) geleitet und ein anderer Teil abgeschlämmt wird.

24. Verfahren nach Anspruch 23, **dadurch gekennzeichnet, daß** der luftanströmseitige Bereich (2 I), insbesondere durch eine Förderpumpe (16), eine erhöhte Wasserbenetzung erhält.

25. Verfahren nach einem der vorherigen Ansprüche 23 oder 24, **dadurch gekennzeichnet, daß** Frischwasserzulauf und/oder Abschlämmenge automatisch geregelt werden, insbesondere in Abhängigkeit der Meßwerte einer Luftvolumenstrom-Differenzdruckeinheit und/oder eines Wasserstandsreglers.

## Claims

1. Evaporative humidifier comprising an evaporator body arrangement divided into an air-inflow region (2 I) and an air-outflow region (2 II), **characterised in that** each region is supplied separately with water, the air-outflow region (2 II) being supplied exclusively with fresh water and the air-inflow region (2 I) being supplied with circulating water, part of which is bled off and replaced by water leaving the air-outflow region (2 II).

2. Evaporative humidifier according to one of the preceding claims, **characterised in that** a water distributor (3) is arranged above each region (2 I, 2 II) to supply the respective region (2 I, 2 II) with water.

3. Evaporative humidifier according to one of the preceding claims, **characterised in that** a water collector (4 II) is arranged below the air-outflow region (2 II), the water collected being led from there to the water distributor (3) of the air-inflow region (2 I).

4. Evaporative humidifier according to one of the preceding claims, **characterised in that** the air-inflow region (2 I) has a bottom drip surface (13), a small part of which is arranged above a first water collector (4 I) and a larger part of which is arranged above a second water collector (4 II).

5. Evaporative humidifier according to one of the preceding claims, **characterised in that** the water from the first water collector (4 I) is bled off and is led from the second water collector (4 II) back to the water distributor (3) of the air-inflow region (2 I).

6. Evaporative humidifier according to one of the preceding claims, **characterised in that** the quantity of water bled off from the first water collector (4 I) is adjustable.

7. Evaporative humidifier according to claim 6, **characterised in that** the proportion of a drip surface arranged above a first or a second collecting tray is variable.

8. Evaporative humidifier according to claim 7, **characterised in that** a partition wall which feeds the dripping water to one or other of the collecting trays is displaceable or can be tilted in a top region.

9. Evaporative humidifier according to one of the preceding claims, **characterised in that** the air-inflow region (2 I) has a smaller volume, in particular a smaller thickness in the direction (8) of the air flow, than the air-outflow region (2 II).

10. Evaporative humidifier according to one of the preceding claims, **characterised in that** the water distributor (3), the evaporator body arrangement (2) and the water collector (4 I, 4 II) are units which can be mounted separately from one another in a housing (9) of the evaporative humidifier (1).

11. Evaporative humidifier according to one of the preceding claims, **characterised in that** the two regions (2 I, 2 II) of the evaporator body arrangement (2) can be replaced and/or cleaned independently of one another.

12. Evaporative humidifier according to one of the preceding claims, **characterised in that** one water distributor (3) has guide elements (11) forming a guide rail for an evaporator body arrangement (2) which can be inserted therein.

13. Evaporative humidifier according to one of the preceding claims, **characterised in that** an evaporator body arrangement (2) inserted into a rail stands on a base element (12) in the housing (9).

14. Evaporative humidifier according to one of the preceding claims, **characterised in that** the evaporator body arrangement (2) includes two separate evaporator bodies (2 I, 2 II) which, in particular, can be connected together.

15. Evaporative humidifier according to one of the preceding claims, **characterised in that** the evaporator body arrangement (2) consists of a basket divided into two regions, wherein each basket region can be filled with bulk material, in particular balls.

16. Evaporative humidifier according to one of the preceding claims, **characterised in that** the water distributor (3) arranged above the evaporator body arrangement (2) includes a trough (5) which can be filled with water via an inlet (6) and which has outlet openings (7).

17. Evaporative humidifier according to one of the preceding claims, **characterised in that** the outlet openings (7) are arranged in at least one side wall of the trough (5).

18. Evaporative humidifier according to one of the preceding claims, **characterised in that** the outlet openings (7) are arranged in at least one horizontal line.

19. Evaporative humidifier according to one of the preceding claims, **characterised in that** the water distributor (3) can be aligned in the evaporative humidifier, in particular, can be fixed to the top housing wall (9) or to the lid of the housing.

20. Evaporative humidifier according to one of the preceding claims, **characterised in that** the water distributor (3) can be fixed and aligned by means of screws guided in springs (10).

21. Evaporative humidifier according to one of the preceding claims, **characterised in that** the outlet openings (7) situated in a common horizontal line all have the same diameter.

22. Evaporative humidifier according to one of the preceding claims, **characterised in that** the outlet openings (7) situated in a higher horizontal line have a larger diameter than the outlet openings (7) situated in a lower horizontal line.

23. Method of operating an evaporative humidifier according to one of the preceding claims, **characterised in that**
- the air-outflow region (2 II) is supplied exclusively with fresh water,
- the water dripping from the air-outflow region (2 II) is fed to a water distributor (3) of the air-inflow region (2 I), and
- part of the water dripping from the air-inflow region (2 I) is fed back to its water distributor (3) and another part is bled off.

24. Method according to claim 23, **characterised in that** the air-inflow region (2 I) is subjected to increased wetting with water, in particular by means of a delivery pump (16).

25. Method according to one of the preceding claims 23 or 24, **characterised in that** the supply of fresh water and/or the quantity of water bled off are controlled automatically, in particular as a function of the measured values of an air volume flow rate differential pressure unit and/or a water-level controller.

## Revendications

1. Humidificateur à évaporation pourvu d'un agencement de corps d'évaporation, qui est subdivisé en une zone du côté affluence de l'air (2 I) et une zone du côté évacuation de l'air (2 II), **caractérisé en ce que** chaque zone est alimentée séparément en eau, la zone du côté évacuation de l'air (2 II) étant exclusivement alimentée en eau fraîche et la zone du côté affluence de l'air (2 I), en eau de circulation, dont une partie est purgée et remplacée par de l'eau sortant de la zone du côté évacuation de l'air (2 II).

2. Humidificateur à évaporation selon l'une quelconque des revendications précédentes, **caractérisé *en* ce qu'**au-dessus de chaque zone (2 I, 2 II), est agencé un dispositif distributeur d'eau (3), à partir duquel la zone respective (2 I, 2 II) est alimentée en eau.

3. Humidificateur à évaporation selon l'une quelconque des revendications précédentes, **caractérisé en ce qu'**au-dessous de la zone du côté évacuation de l'eau (2 II) est agencé un dispositif collecteur d'eau (4 II), à partir duquel l'eau collectée est acheminée dans le dispositif distributeur d'eau (3) de la zone du côté affluence de l'air (2 I).

4. Humidificateur à évaporation selon l'une quelconque des revendications précédentes, **caractérisé en ce que** la zone du côté affluence de l'air (2 I) présente une surface d'égouttage inférieure (13), qui est agencée vers une petite partie par l'intermédiaire d'un premier dispositif collecteur d'eau (4 I) et vers une grande partie par l'intermédiaire d'un deuxième dispositif collecteur d'eau (4 II).

5. Humidificateur à évaporation selon l'une quelconque des revendications précédentes, **caractérisé en ce que** l'eau est purgée à partir du premier dispositif collecteur d'eau (4 I) et ramenée, à partir du deuxième dispositif collecteur d'eau (4 II), dans le dispositif distributeur d'eau (3) de la zone du côté affluence de l'air (2 I).

6. Humidificateur à évaporation selon l'une quelconque des revendications précédentes, **caractérisé en ce que** la part de volume d'eau purgée à partir du premier dispositif collecteur d'eau (4) peut être réglée de façon variable.

7. Humidificateur à évaporation selon la revendication 6, **caractérisé en ce que** la part d'une surface d'égouttage, qui est agencée au-dessus d'une première ou d'une deuxième cuve collectrice, est variable.

8. Humidificateur à évaporation selon la revendication 7, **caractérisé en ce qu'**une paroi de séparation, qui conduit l'eau s'égouttant de l'une ou de l'autre cuve collectrice, peut être décalée ou basculée dans une zone supérieure.

9. Humidificateur à évaporation selon l'une quelconque des revendications précédentes, **caractérisé en ce que** la zone du côté affluence de l'air (2 I) présente un volume inférieur, notamment une épaisseur inférieure dans le sens d'écoulement de l'air (8), à la zone du côté évacuation de l'air (2 II).

10. Humidificateur à évaporation selon l'une quelconque des revendications précédentes, **caractérisé en ce que** le dispositif distributeur d'eau (3), l'agencement de corps d'évaporation (2) et le dispositif collecteur d'eau (4 I, 4 II) sont des unités pouvant être montées séparément les unes des autres dans un boîtier (9) de l'humidificateur à évaporation (1).

11. Humidificateur à évaporation selon l'une quelconque des revendications précédentes, **caractérisé en ce que** les deux zones (2 I, 2 II) de l'agencement de corps d'évaporation (2) peuvent être remplacées et / ou nettoyées indépendamment l'une de l'autre.

12. Humidificateur à évaporation selon l'une quelconque des revendications précédentes, **caractérisé en ce qu'**un dispositif distributeur d'eau (3) présente des éléments de guidage (11), qui forment un rail de guidage pour un agencement de corps d'évaporation (2) pouvant être introduit dedans.

13. Humidificateur à évaporation selon l'une quelconque des revendications précédentes, **caractérisé en ce qu'**un agencement de corps d'évaporation (2) introduit dans un rail est posé sur un élément de socle (12) dans le boîtier (9).

14. Humidificateur à évaporation selon l'une quelconque des revendications précédentes, **caractérisé en ce que** l'agencement de corps d'évaporation (2) comporte deux corps d'évaporation (2 I, 2 II) séparés, qui peuvent être reliés l'un à l'autre notamment.

15. Humidificateur à évaporation selon l'une quelconque des revendications précédentes, **caractérisé en ce que** l'agencement de corps d'évaporation (2) est composé d'un panier divisé en deux zones, chaque zone du panier pouvant être remplie d'un produit en vrac, notamment de boules.

16. Humidificateur à évaporation selon l'une quelconque des revendications précédentes, **caractérisé en ce que** le dispositif distributeur d'eau (3) agencé en amont de l'agencement de corps d'évaporation (2) comporte une cuve (5) pouvant être remplie d'eau par l'intermédiaire d'une arrivée (6), qui présente des orifices de décharge (7).

17. Humidificateur à évaporation selon l'une quelconque des revendications précédentes, **caractérisé en ce que** les orifices de décharge (7) sont agencés dans au moins une paroi latérale de la cuve (5).

18. Humidificateur à évaporation selon l'une quelconque des revendications précédentes, **caractérisé en ce que** les orifices de décharge (7) sont agencés sur au moins une ligne horizontale.

19. Humidificateur à évaporation selon l'une quelconque des revendications précédentes, **caractérisé en ce que** le dispositif distributeur d'eau (3) peut être fixé de manière orientable dans l'humidificateur à évaporation (1), notamment au niveau de la paroi supérieure de boîtier (9) ou du couvercle de boîtier.

20. Humidificateur à évaporation selon l'une quelconque des revendications précédentes, **caractérisé en ce que** le dispositif distributeur d'eau (3) peut être fixé et orienté au moyen de vis insérées dans des ressorts (10).

21. Humidificateur à évaporation selon l'une quelconque des revendications précédentes, **caractérisé en ce que** les orifices de décharge (7), qui se situent sur une ligne horizontale commune, présentent tous le même diamètre.

22. Humidificateur à évaporation selon l'une quelconque des revendications précédentes, **caractérisé en ce que** les orifices de décharge (7), qui sont situés sur une ligne horizontale plus haute, présentent un diamètre supérieur à celui des orifices de décharge (7) qui sont situés sur une ligne horizontale plus basse.

23. Procédé de fonctionnement d'un humidificateur à évaporation selon l'une quelconque des revendications précédentes, **caractérisé en ce que**
- la zone du côté évacuation de l'air (2 II) est alimentée exclusivement en eau fraîche,
- l'eau s'égouttant de la zone du côté évacuation de l'air (2 II) est amenée à un dispositif distributeur d'eau (3) de la zone du côté affluence de l'air (2 I),
- une partie de l'eau s'égouttant de la zone du côté affluence de l'air (2 I) est ramenée dans son dispositif distributeur d'eau (3), et une autre partie est purgée.

24. Procédé selon la revendication 23, **caractérisé en ce que** la zone du côté affluence de l'air (2 I) obtient un mouillage d'eau accru, notamment par l'intermédiaire d'une pompe d'alimentation (16).

25. Procédé selon l'une des revendications 23 ou 24, **caractérisé en ce que** l'arrivée d'eau fraîche et / ou la quantité de purge est régulée de façon automatique, notamment en fonction des valeurs de mesure d'une unité de pression différentielle du courant du volume d'air et / ou d'un régulateur de niveau d'eau.
